# EUROPEAN PATENT SPECIFICATION

(11) **EP 2 703 956 B1**
(45) Date of publication and mention of the grant of the patent: **26.11.2014**
(21) Application number: 12182611.9
(22) Date of filing: 31.08.2012
(51) Int. Cl.: G06F 3/023, G06F 17/27

(54) **Ranking predictions based on typing speed and typing confidence**
Bewerten von Vorhersagen basierend auf der Tippgeschwindigkeit und Tippsicherheit
Classement de prédictions basé sur la vitesse de frappe et la confiance de frappe

(43) Date of publication of application: 05.03.2014
(73) Proprietor: BlackBerry Limited, Waterloo, ON N2K 0A7 (CA)
(72) Inventor: Pasquero, Jerome, Montreal, Québec H2Y 2P5 (CA); Griffin, Jason Tyler, Waterloo, Ontario N2L 3W8 (CA); McKenzie, Donald Somerset McCulloch, Waterloo, Ontario N2L 3W8 (CA)
(74) Representative: Moore, Barry

(56) References cited:
- EP-A1- 2 293 168
- US-A1- 2010 315 266
- US-A1- 2011 193 797
- US-A1- 2011 209 087
- US-A1- 2012 167 009

## Description

### FIELD

Example embodiments disclosed herein relate generally to input methodologies for electronic devices, such as handheld electronic devices.

### BACKGROUND

Increasingly, electronic devices, such as computers, netbooks, cellular phones, smart phones, personal digital assistants, tablets, etc., have touchscreens that allow a user to input characters into an application, such as a word processor or email application. Character input on touchscreens can be a cumbersome task due to, for example, the small touchscreen area, particularly where a user needs to input a long message.

US 2012/167009 A1 discloses techniques to automatically correct or complete text. A string and keystroke timing information associated with entry of the string, for example via an input device such as a keyboard, are received. A word to suggest as a correction or completion of the string is determined based at least in part on the keystroke timing information.

US 2011/209087 A1 relates to a progressive multilevel interactively guided method and device for inputting to an apparatus any object among a set of up to N*N objects having each a symbolic representation, the small device comprising N sensible and N visual zones in correspondence one by one and having same form and relative positions, the method comprising the steps of showing N objects in each visual zone, a first actuation of the sensible zone associated with the visual zone showing the object to be selected, the distribution of the N shown objects in each N visual zones, a second actuation of the sensible zone associated with the visual zone showing the object to be selected, and an inputting of the selected object to the apparatus when the sensible zone is released. The objects symbolic representations are positioned within the visual zones in such a manner that the method is intuitive, easy to memorize and flexible, and via progressive levels, upward compatible with faster, chordic and less or no visual area demanding methods. The invention also relates to network systems using programs executing such methods and devices.

The invention is defined by the appended claims.

### BRIEF DESCRIPTION OF THE DRAWINGS

**Fig. 1** is an example block diagram of an electronic device, consistent with embodiments disclosed herein.
**Fig. 2** is a flowchart illustrating an example method for generating, ranking, and displaying predicted strings, consistent with embodiments disclosed herein.
**Fig. 3** shows an example front view of a touchscreen, consistent with embodiments disclosed herein.

### DETAILED DESCRIPTION

Reference will now be made in detail to various embodiments, examples of which are illustrated in the accompanying drawings. Wherever possible, the same reference numbers will be used throughout the drawings to refer to the same or like parts.

The present disclosure relates to an electronic device, such as a wired communication device (for example, a laptop computer having a touchscreen) or a mobile/handheld wireless communication device such as a cellular phone, smartphone, wireless organizer, personal digital assistant, wirelessly enabled notebook computer, tablet, or a similar device. The electronic device can also be an electronic device without wireless communication capabilities, such as a handheld electronic game device, digital photograph album, digital camera, or other device.

Predictive text input solutions have been introduced for assisting with input on an electronic device. These solutions include predicting which word a user is entering and offering a suggestion for completing and/or correcting the word.

Throughout this application, the terms "string" and "string of characters" are used interchangeably. Use of the indefinite article "a" or "an" in the specification and the claims is meant to include one or more features that it introduces, unless otherwise indicated. Thus, the term "a predicted string of characters" as used, for example, in "generating a predicted string of characters" can include the generation of one or more predicted strings of characters. Similarly, use of the definite article "the", or "said", particularly after a feature has been introduced with the indefinite article, is meant to include one or more features to which it refers (unless otherwise indicated). Therefore, the term "the predicted string" as used, for example, in "displaying the predicted string" includes displaying one or more predicted strings.

In one embodiment, a method is provided in accordance with claim 1. Advantageous features are provided in the dependent claims. The predicted string is, for example, the product of a prediction algorithm. This and other embodiments described below provide the user with better predictions of the intended input. Better predictions can improve text input speed, reduce processing cycles and, in some instance, save power.

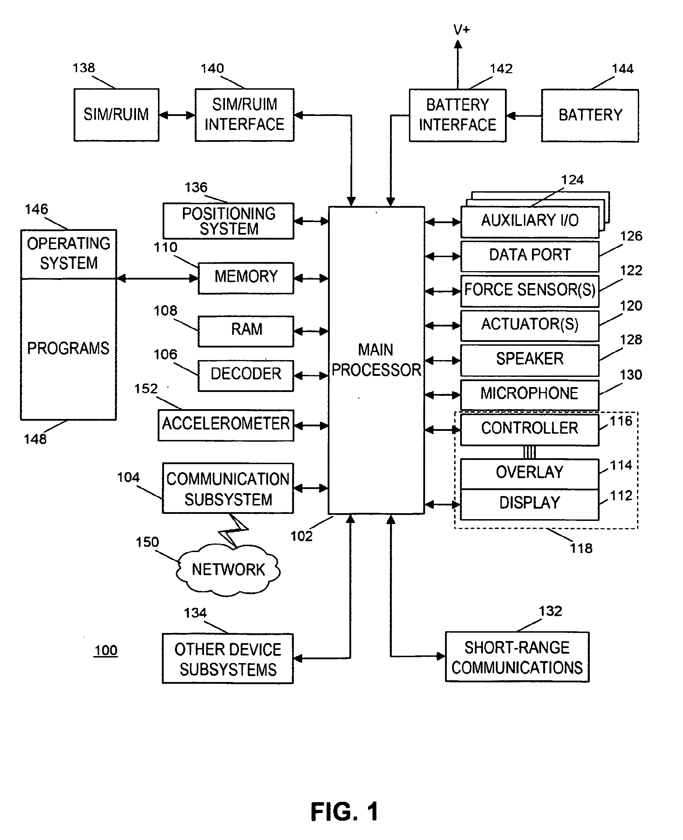

**Fig. 1** is a block diagram of an electronic device 100, consistent with example embodiments disclosed herein. Electronic device 100 includes multiple components, such as a main processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Main processor 102 is coupled to and can interact with additional subsystems such as a Random Access Memory (RAM) 108; a memory 110, such as a hard drive, CD, DVD, flash memory, or a similar storage device; one or more actuators 120; one or more force sensors 122; an auxiliary input/output (I/O) subsystem 124; a data port 126; a speaker 128; a microphone 130; short-range communications 132; an accelerometer 152; other device subsystems 134; and a touchscreen 118.

Device 100 includes a man-machine interface, for example, touchscreen 118, which includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Main processor 102 interacts with touch-active overlay 114 via controller 116. Characters, such as text, symbols, images, and other items are displayed on display 112 of touchscreen 118 via main processor 102. Characters are inputted when the user touches the touchscreen at a location associated with said character.

Touchscreen 118 is connected to and controlled by main processor 102. Accordingly, detection of a touch event and/or determining the location of the touch event can be performed by touchscreen 118, and touch data related to the touch event can then be provided to main processor 102. In some embodiments, touchscreen 118 communicates with main processor 102 through a touchscreen controller (not shown), which can process the touch data provided by touchscreen 118 and provide processed touchscreen data to main processor 102. A touch event includes, in some embodiments, a tap by a finger, a swipe by a finger, a swipe by a stylus, a long press by finger or stylus, a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

When the user touches touchscreen 118, touchscreen 118 can register a two-dimensional imprint of the touch. Touchscreen 118 can analyze the imprint and provide to main processor 102 the (X,Y) coordinates of the center of the touch, the geometrical characteristics of the touch, the pressure applied by the touch, and so forth. The geometrical characteristics include, for example, parameters defining the geometrical shape (e.g., circle, ellipse, square) approximating the touch area.

Main processor 102 can also interact with a positioning system 136 for determining the location of electronic device 100. The location can be determined in any number of ways, such as by a computer, by a Global Positioning System (GPS), either included or not included in electric device 100, through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by main processor 102 and that are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, or web page download is processed by communication subsystem 104 and this processed information is then provided to main processor 102. Main processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

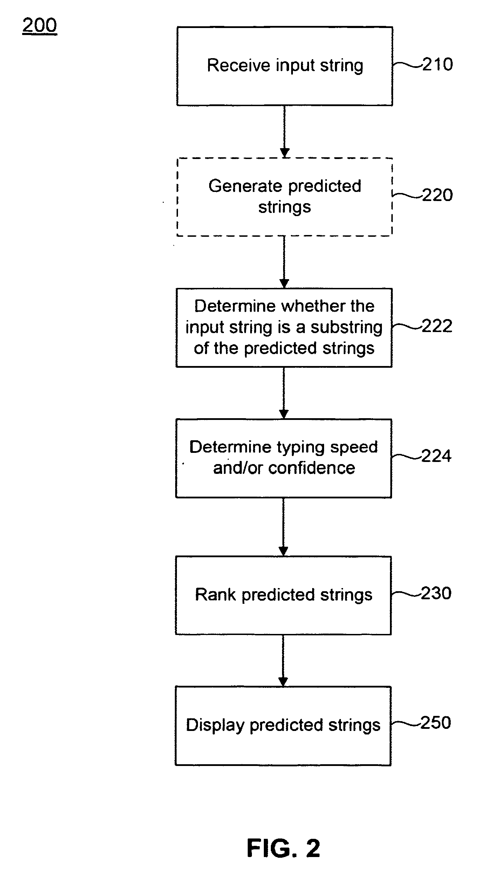

**Fig. 2** is a flowchart illustrating an example method 200 for generating, ranking and displaying predicted strings of characters (hereinafter, "predicted strings"), consistent with example embodiments disclosed herein. As used herein, a predictor (such as a predictive algorithm, program, firmware, or a dedicated hardware module) includes a set of instructions that when executed by a processor (e.g., main processor 102), can be used to disambiguate received ambiguous text input and provide various predicted strings (for example, words or phrases, acronyms, names, slang, colloquialisms, abbreviations, or any combination thereof) based on the input. A predictor can also receive otherwise unambiguous text input and generate predicted strings potentially contemplated by the user based on several factors, such as context, frequency of use, and others as appreciated by those skilled in the field.

In an example embodiment, the predictor is one of the programs 148 residing in memory 110 of electronic device 100. Accordingly, method 200 includes a predictor for generating predicted strings corresponding to the input string of characters. It can be appreciated that while the example embodiments described herein are directed to a predictor program executed by a processor, the predictor can be executed, for example, by a virtual keyboard controller.

Method 200 begins at block 210, where the processor (e.g., main processor 102) receives an input string of one or more characters (hereinafter, "input string") from a virtual keyboard displayed on touchscreen 118. As used herein, a character can be any alphanumeric character, such as a letter, a number, a symbol, a punctuation mark, and the like.

At block 220, the processor optionally generates one or more predicted strings such as words or phrases, acronyms, names, slang, colloquialisms, abbreviations, or any combination thereof based on the input string received in block 210. The predicted strings include, for example, strings that are stored in a dictionary of a memory of the electronic device (for example, words or acronyms), strings that were previously inputted by the user (for example, names or acronyms), strings based on a hierarchy or tree structure, a combination thereof, or any strings selected by a processor based on defined arrangement.

In some embodiments, the processor can use contextual data for generating a predicted string. Contextual data considers the context in which the input string is entered. Contextual data can include, for example, information about strings previously inputted by the user, grammatical attributes of the input string (for example, whether a noun or a verb is needed as the next string in a sentence), or any combination thereof. For example, if the string "the" has already been inputted into display, the processor can use the contextual data to determine that a noun or an adjective - instead of a verb - will be the next string after "the". Likewise, if the string "Guy Lafleur played in the National Hockey" was inputted, based on the context, the processor can determine the subsequent string is likely to be "League". Using the contextual data, the processor can also determine whether one or more characters in the input string are incorrect. For example, the processor can determine that the inputted character was supposed to be a "w" instead of an "a", given the proximity of these characters on a QWERTY virtual keyboard. Any known predictive technique or software can be used to process the input string and the contextual data in generating the predicted strings at block 220.

In some embodiments, a predicted string generated at block 220 can begin with the input string; in other words, the input string can constitute a prefix (a substring) of the predicted string. For example, if the characters "pl" are received as the input string from a virtual keyboard, the predicted strings generated at block 220 can begin with "pl", and can include "please", "plot", and "place". Similarly, if the user enters the input string "child", the predicted strings generated at block 220 can include "children" and "childish".

In some example embodiments, the processor can generate at block 220 predicted strings to which the input string is not a prefix (substring). For example, if the user inputs the string "id", the processor can generate a predicted string "I'd", even though "id" is not a substring of "I'd". As another example, the processor can generate a predicted string "receive" for the input string "reci" (in case the user makes a spelling mistake or a typo). Because the input string does not have to be an exact substring of the predicted string, the user is allowed to make spelling or typing mistakes, use abbreviations, disregard the letter case, and so forth. Thus, the user can significantly increase the typing speed without sacrificing accuracy, by relying on the electronic device to automatically complete the input and correct it, if needed.

Predicted strings that do not begin with the input string (predicted strings to which the input string is not a substring) may be referred to as "correcting predicted strings", and predicted strings that begin with the input string (predicted strings to which the input string is a substring) may be referred to as "non-correcting predicted strings."

In some example embodiments, the processor can generate more than one predicted string based on the input string, where some of the predicted strings can be correcting and some non-correcting. For example, if the user inputs the string "id", the processor can disambiguate the input and generate the predicted strings "I'd", "ID", "is", and "idea" as probable intended inputs. In another example, if the user inputs the string "misp", the processor can generate the predicted strings "misplaced" and "misspelled". In both examples, some of the generated strings are correcting ("I'd", "ID", "is", "misspelled") and some are non-correcting ("idea", "misplaced").

In some example embodiments, the predicted strings are not generated by the main processor 102. In these embodiments, main processor 102 provides the input string, for example, to a prediction processor (not shown), which generates predicted strings based on the provided input string, and sends the predicted strings to main processor 102. The prediction processor can be a software- or hardware-based module communicatively coupled to main processor 102. The prediction processor can be either local or remote to electronic device 100.

At block 222, the processor determines, for example, for each predicted string, whether it is a correcting predicted string or a non-correcting predicted string (i.e., whether or not the input string is a substring of the predicted string). At block 224, the processor determines, for example, the typing speed and/or the typing confidence, as will be explained in detail below.

At block 230, the predicted strings generated at block 220 are ranked, as discussed in detail below. The ranking of a predicted string reflects the likelihood (probability) that the user intends to input that predicted string, that is, the likelihood that the predicted string is the intended input, given the already inputted input string.

At block 240, the processor displays one or more of the ranked, predicted strings on display 112. The displayed strings can be displayed at or near the input field, on the virtual keyboard (for example, on or near the <space> key or on keys corresponding to characters predicted as the next characters the user might input) or at any other suitable display location. In some embodiments, the processor can limit the number of ranked strings to display. For example, the processor can choose to display only a predetermined number (1, 3, 10, etc.) of the highest-ranked predicted strings.

### Ranking the Generated Strings

In some embodiments, contextual data can be included in the ranking at block 230. For example, the electronic device can be configured to rank nouns or adjectives higher based on the previous input strings. If the input string is suggestive of a noun or adjective, the processor, using the contextual data, can rank higher those predicted strings that correspond to nouns or adjectives. In some embodiments, contextual data can include information about which programs or applications are currently running or being used by a user. For example, if the user is running an email application, then strings associated with that user's email system, such as strings from the user's contact list, can be used to determine the ranking. N-grams, including unigrams, bigrams, trigrams, and the like, can be also used in the ranking of the predicted strings.

Additionally, the geolocation of the electronic device or user can be used in the ranking process. If, for example, the electronic device recognizes that a user is in an office building, then predicted strings that are generally associated with work can be ranked higher in the list. If, on the other hand, the device determines that the user is at the beach, then predicted strings generally associated with the beach can be ranked higher in the list.

### Ranking as a function of a typing speed

In some embodiments, the ranking at block 230 can be based on the typing speed of the user inputting the string in the first instance. For example, if the processor determines (e.g., at block 224) that the user is typing fast (e.g., faster than a predetermined threshold) then the processor can decide that the likelihood that a user made a typo or neglected to properly spell or capitalize words is higher. Consequently, in some embodiments, the processor can increase the ranking of correcting predicted strings relative to non-correcting predicted strings, when the user types faster. For example, if the user types "id" and the processor determines a fast typing speed, the processor can boost (increase) the ranking of the corrected predicted string "I'd", and decrease the ranking of the non-correcting predicted string "idea", or keep its ranking unchanged. Assuming, for example, that the two predicted strings were ranked similarly before typing speed was factored in, such an adjustment in rankings can render "I'd" being ranked higher than "idea".

As discussed above, the rankings can determine which predicted strings are displayed at step 240 (and in which order) and which predicted strings are not displayed. Thus, for example, when the processor displays only the highest ranked predicted string, or when the processor displays a predetermined number of highest ranked predicted strings and "idea" and "I'd" compete for the last displayed position, only "I'd" would be displayed in the above example, while "idea" would not.

In some embodiments, the ranking of correcting predicted strings is in direct relationship with the typing speed. In other words, the ranking increases when the typing speed increases, and decreases when the typing speed decreases. In some embodiments, the ranking is a monotonically increasing (or non-decreasing) function of the typing speed: it stays the same or increases when the typing speed increases, and it stays the same or decreases when the typing speed decreases. In some embodiments, the ranking of correcting predicted strings is a strictly increasing function of the typing speed, that is, it always increases when the typing speed increases and it always decreases when the typing speed decreases. The direct relationship between the ranking of the correcting predicted string and the typing speed can be, for example, proportional, exponential, differentiable or not differentiable, etc.

In some embodiments, the ranking function can have one or more predetermined thresholds. For example, typing speeds above a maximum threshold can be rounded to that maximum threshold, and typing speeds below a minimum threshold can be rounded to that minimum threshold and considered "low" or zero speed. In some embodiments, the ranking function can be designed such that a low or zero typing speed will not boost the ranking of a correcting predicted string.

In some embodiments, when the typing speed is high, instead of (or in addition to) increasing the ranking of the correcting predicted strings, the processor can decrease the ranking of the non-correcting predicted strings. For example, the ranking of non-correcting predicted strings can be set to be in inverse relationship with the typing speed, while the ranking of correcting predicted strings can be independent of the typing speed.

In some embodiments, the ranking of both types of predicted strings can depend on the typing speed. For example, the ranking of correcting predicted strings can be in direct relationship with the typing speed, while the ranking of non-correcting predicted strings can be in reverse relationship with the typing speed.

The typing speed can be defined and measured by the processor using any suitable means. In some embodiments, the typing speed is defined, for example, as the average speed (e.g., in characters per second) over the last O inputted characters, last P words, last Q seconds, or any combination thereof, where O, P, and Q can be different predetermined numbers. In some embodiments, the typing speed can be determined by combining the short-term speed (the speed with which the last several characters were typed) with the long-term speed (for example, the average speed across the entire input text).

### Ranking as a function of a typing confidence

In some embodiments, the ranking at block 230 depends on the typing confidence value that reflects the confidence with which the user selects (touches on) keys on a virtual keyboard. Because confident typing can be correlated with a lower likelihood of a mistake, the processor can boost (increase) the ranking of the non-correcting predicted strings when the typing confidence is high. When the typing confidence is low, the processor can, for example, keep the ranking of the non-correcting predicted strings unchanged, or lower the ranking.

In some embodiments, the ranking of non-correcting predicted strings is in direct relationship with the typing confidence. In other words, the ranking increases when the typing confidence increases, and decreases when the typing confidence decreases. In some embodiments, the ranking is a monotonically increasing (or non-decreasing) function of the typing confidence: it stays the same or increases when the typing confidence increases, and it stays the same or decreases when the typing confidence decreases. In some embodiments, the ranking of non-correcting predicted strings is a strictly increasing function of the typing confidence, that is, it always increases when the typing confidence increases and it always decreases when the typing confidence decreases. The direct relationship (the function) can be, for example, proportional, exponential, differentiable or not differentiable, etc.

In some embodiments, the ranking function can have one or more predetermined thresholds. For example, a typing confidence above a maximum threshold can be rounded to that maximum threshold, and a typing confidence below a minimum threshold can be rounded to that minimum threshold and considered "low" or zero confidence. In some embodiments, the ranking function can be designed such that a low or zero typing confidence will not boost the ranking of a non-correcting predicted string.

In some embodiments, when the typing confidence is high, instead of (or in addition to) increasing the ranking of the non-correcting predicted strings, the processor can decrease the ranking of the correcting predicted strings. For example, the ranking of correcting predicted strings can be set to be in inverse relationship with the typing confidence, while the ranking of non-correcting predicted strings can be independent of the typing confidence. In some embodiments, the ranking of both types of predicted strings can depend on the typing confidence. For example, the ranking of non-correcting predicted strings can be in direct relationship with the typing confidence, while the ranking of correcting predicted strings can be in reverse relationship with the typing confidence.

The typing confidence can be measured by the processor, for example, by estimating the confidence with which the user touches the virtual keyboard on touchscreen 118 during typing. In some embodiments, the confidence of an individual touch is a function of the strength of the touch. In some embodiments, the touchscreen 118 is configured to measure the strength (e.g., the applied pressure) directly, in which case the strength measurement can be passed by touchscreen 118 to the processor.

In other embodiments, the confidence of a touch can be determined based on the area of location of the touch, because strong and confident touches can be correlated with larger touch areas. The touch area can be calculated by touchscreen 118 and passed to the processor as a parameter, for example, along with the (X, Y) coordinates of the center of the touch area. Alternatively, in some embodiments, touchscreen 118 passes to the processor parameters defining the approximated shape (square, circle, ellipse, etc.) formed by the touch, in which case, the processor can calculate the size (the area) of the shape. In some embodiments, touchscreen 118 can pass to the processor raw data corresponding to the touch - unprocessed signal data registered by touchscreen 118 during the touch - and the processor can process the data, calculate the area, and derive the touch confidence value. Touch confidence can be a linear function of the touch area, or it can be an exponential function, a quadratic function, or any other suitable type of function.

In some embodiments, typing confidence can be calculated as the average or median value of touch confidence values corresponding to one or more recent touches by the user. For example, the processor can calculate the average touch confidence across a predetermined number of most recent touches (character inputs) by the user. As another example, the processor can first determine a long-term confidence baseline by averaging touch confidence values over a large number of touches, and then combine the baseline information with the short-term information regarding the most recent touches. In some embodiments, the processor can give more weight to the touches corresponding to characters at which the mistake has potentially occurred. In some embodiments, the processor can also consider how close the center of the touch is to the center of the corresponding key, when estimating typing confidence.

In some embodiments, typing confidence can be derived based on the stability of electronic device 100. For example, if the processor determines that the device is unstable and is shaking a lot (e.g., the user is texting from a taxi, or while walking), the processor can decide that the likelihood of mistake is higher. The processor can therefore rank correcting predicted strings higher relatively to the non-correcting predicted strings, using, for example, any of the methods described above in connection to typing speed and typing confidence. In some embodiments, the level of stability of electronic device 100 can be determined using accelerometer 152. For example, accelerometer 152 can provide to the processor acceleration data indication the level of acceleration of the device in one or more directions. The processor can then determine, for example, that when the acceleration in any one direction exceeds a predetermined acceleration threshold, the device is no longer "stable".

In some embodiments, the processor can combine information regarding the typing speed, the typing confidence, device stability, and any other relevant information when ranking predicted strings. The processor can use any suitable function that combines the factors, such as a linear combination of the factors, wherein each factor can be weighed differently.

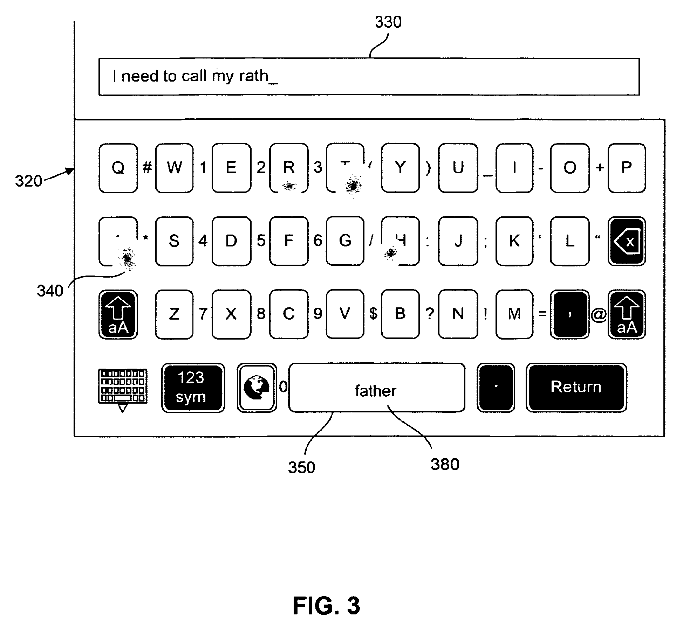

**Fig. 3** illustrates an example front view of touchscreen 118 having a virtual keyboard 320, consistent with example embodiments disclosed herein. The position of the virtual keyboard 320 is variable such that virtual keyboard 320 can be placed at any location on touchscreen 118. Touchscreen 118 could be configured to detect the location, the size and possibly pressure of the user's touches. Touchscreen 118 includes two areas: (1) an input field 330 that displays characters inputted by the user and (2) the virtual keyboard 320 that receives the input from the user. As shown in **Fig. 3****,** touchscreen 118 displays a virtual keyboard 320 having a standard QWERTY layout; however, any keyboard layout can be displayed for use in the device, such as AZERTY, QWERTZ, or a layout based on the International Telecommunication Union (ITU) standard (ITU E.161) having "ABC" on key 2, "DEF" on key 3, and so on. Virtual keyboard 320 includes a space key 350 as well as other keys that can provide different inputs, such as punctuation, letters, numbers, enter or return keys, and function keys.

As shown in **Fig. 3**, the user has already inputted the text "I need to call my rath". Touch areas 340 correspond to the user's last four touches on keys "R", "A", "T", and "H". The processor receives (210) the input string "rath", and generates (220) predicted strings based on the input string. For example, the processor generates two predicted strings: "rather" and "father". As discussed above, "rather" is a non-correcting predicted string because the input string "rath" is its substring. In contrast, "father" is a correcting predicted string because the input string is not its substring. The correcting predicted string "father" can be generated by the processor, for example, because of its similarity to the input string and also because the keys "R" and "F" are closely positioned on the virtual keyboard, which could suggest a possible typo.

The processor then ranks (230) the two predicted strings. The processor can first rank the non-correcting predicted string "rather" using a formula that is based on a number of factors discussed above, such as the contextual data, N-gram data, geolocation data, etc. The processor can then rank the correcting predicted string "father". Because "father" is a correcting predicted string, it can be ranked using different or additional factors. For example, the processor can include the same factors that were used for ranking the non-correcting predicted string "rather", but then also consider the typing speed and/or the typing confidence. In this example, "rather" is ranked higher than "father" when the ranking is based only on factors such as the contextual data, N-gram data, geolocation data, etc. However, assuming that the processor determines a high typing speed and/or low typing confidence (given the small touch areas 340, for example), these additional factors can boost the ranking of the correcting predicted string "father" relatively to the non-correcting predicted string "rather", and render "father" as the highest-ranked predicted string.

In some embodiments, the processor can rank the predicted strings by first assigning each predicted string a score based on factors other than the typing speed and typing confidence. The processor then adjusts the scores based on the typing speed and/or typing confidence. For example, if the typing speed is high and/or the typing confidence is low, the processor can multiply the scores of the correcting strings by a factor greater than one (e.g., 1.2) and/or multiply the scores of the non-correcting strings by a factor smaller than one (e.g., 0.8). Similarly, if the typing speed is low and/or the typing confidence is high, the processor can multiply the scores of the non-correcting strings by a factor greater than one and/or multiply the scores of the correcting strings by a factor smaller than one.

In the example illustrated in **Fig. 3**, the processor can first assign scores based on the contextual data, N-gram data, and geolocation data, as described above, and assign the following scores, first:

| **Predicted String** | **Score** |
|---|---|
| rather | 0.57 |
| father | 0.52 |

The scores can, but do not have to, be normalized so that the sum of all the scores equals 1, in which case each score can represent the probability of the corresponding predicted string to be the one intended by the user.

The processor then considers the typing speed and the typing confidence and adjusts the scores accordingly. Assuming, for example, that the user is typing very fast and/or with a very low typing confidence, the processor can increase the score of the correcting predicted string for example, by a factor of 1.2. The resulting scores would then become:

| **Predicted String** | **Score** |
|---|---|
| rather | 0.57 |
| father | 0.52 × 1.2 = 0.624 |

Thus, in this example, the correcting predicted string "father" emerges as the predicted string with the highest score (i.e., as the highest-ranked predicted string). In some embodiments, the scores can be increased (or decreased) by a predetermined percentage, by a predetermined value, or using any other adjustment formula.

The processor then displays (240) one or more predicted strings on touchscreen 118. In this example, the processor can decide to display only the highest-ranked predicted string, in which case only the correcting predicted string "father" 380 is displayed on space key 350.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Other embodiments of the invention will be apparent to those skilled in the art from consideration of the specification and practice of the invention disclosed herein.

It is intended that the specification and examples be considered as examples only, with a true scope of the invention being indicated by the following claims.

## Claims

1. An input method (200) for a communication device (100) having a processor (102), the method comprising:
receiving (210) as input a string of typed characters;
ranking (230), by the processor (102), a predicted string associated with the input string, wherein if the input string is a substring of the predicted string, the ranking is in inverse relationship with a typing speed or in direct relationship with a typing confidence, and if the input string is not a substring of the predicted string, the ranking is in direct relationship with the typing speed or in inverse relationship with the typing confidence, wherein the typing confidence corresponds to at least one of a stability of the communication device and a strength of one or more touches associated with the input string; and
displaying (240) the ranked predicted string.

2. The method of claim 1, wherein the typing speed corresponds to the average typing speed across a predetermined number of most recently typed characters.

3. The method of claim 1, further comprising determining the strength of the touches based on the area of the location of the touch.

4. The method of claim 1, wherein the typing confidence is determined based on the average strength of a predetermined number of most recently typed characters.

5. The method of any preceding claim, wherein displaying the ranked predicted string comprises displaying the ranked predicted string responsive to a determination that the ranked predicted string is among a predetermined number of most highly ranked predicted strings.

6. An electronic device (100) comprising a display (118) and a processor (102), wherein the processor (102) is configured to perform the method as claimed in any one of claims 1 to 5.

## Patentansprüche

1. Ein Eingabeveifahren (200) für eine Kommunikationsvorrichtung (100), die einen Prozessor (102) aufweist, wobei das Verfahren umfasst:
Erhalten (210), als Eingabe, einer Folge von eingegebenen Zeichen;
Bewerten (230), durch den Prozessor (102), einer vorhergesagten Folge, die mit der Eingabefolge assoziiert ist, wobei, wenn die Eingabefolge eine Teilfolge der vorhergesagten Folge ist, die Bewertung in einer inversen Beziehung mit einer Eingabegeschwindigkeit oder in direkter Beziehung mit einer Eingabesicherheit ist, und wenn die Eingabefolge keine Teilfolge der vorhergesagten Folge ist, die Bewertung in direkter Beziehung mit der Eingabegeschwindigkeit oder in inverser Beziehung mit der Eingabesicherheit ist, wobei die Eingabesicherheit zu mindestens einem aus einer Stabilität der Kommunikationsvorrichtung und einer Stärke von einem oder mehreren Berührungen, die mit der Eingabefolge assoziiert sind, korrespondiert; und
Anzeigen (240) der bewerteten vorhergesagten Folge.

2. Das Verfahren nach Anspruch 1, wobei die Eingabegeschwindigkeit zu der durchschnittlichen Eingabegeschwindigkeit über eine vorbestimmte Anzahl von zuletzt geschriebenen Zeichen korrespondiert.

3. Das Verfahren nach Anspruch 1, ferner umfassend ein Bestimmen der Stärke der Berührungen basierend auf dem Lokalisierungsgebiet der Berührung.

4. Das Verfahren nach Anspruch 1, wobei die Eingabesicherheit basierend auf der durchschnittlichen Stärke einer vorbestimmten Anzahl von zuletzt geschriebenen Zeichen bestimmt wird.

5. Das Verfahren nach einem der vorhergehenden Ansprüche, wobei das Anzeigen der bewerteten vorhergesagten Folge ein Anzeigen der bewerteten vorhergesagten Folge in Reaktion auf eine Bestimmung umfasst, dass die bewertete vorhergesagte Folge unter einer vorhergesagten Anzahl der am höchsten bewerteten vorhergesagten Folgen ist.

6. Eine elektronische Vorrichtung (100), die eine Anzeige (118) und einen Prozessor (102) umfasst, wobei der Prozessor (102) konfiguriert ist, um das Verfahren, wie in einem der Ansprüche 1 bis 5 beansprucht, durchzuführen.

## Revendications

1. Procédé d'entrée (200) pour un dispositif de communication (100) ayant un processeur (102), le procédé comprenant le fait :
de recevoir (210) en tant qu'entrée une chaîne de caractères tapés ;
de classer (230), par le processeur (102), une chaîne prédite associée à la chaîne d'entrée, dans lequel si la chaîne d'entrée est une sous-chaîne de la chaîne prédite, le classement est en relation inverse avec une vitesse de frappe ou en relation directe avec une confiance de frappe, et si la chaîne d'entrée n'est pas une sous-chaîne de la chaîne prédite, le classement est en relation directe avec la vitesse de frappe ou en relation inverse avec la confiance de frappe, la confiance de frappe correspondant à au moins l'une d'une stabilité du dispositif de communication et d'une force d'un ou de plusieurs touchers associés à la chaîne d'entrée ; et
d'afficher (240) la chaîne prédite classée.

2. Procédé de la revendication 1, dans lequel la vitesse de frappe correspond à la vitesse de frappe moyenne sur un nombre prédéterminé de caractères les plus récemment tapés.

3. Procédé de la revendication 1, comprenant en outre la détermination de la force des touchers sur la base de la zone de l'emplacement du toucher.

4. Procédé de la revendication 1, dans lequel la confiance de frappe est déterminée sur la base de la force moyenne d'un nombre prédéterminé de caractères les plus récemment tapés.

5. Procédé de l'une des revendications précédentes, dans lequel l'affichage de la chaîne prédite classée comprend l'affichage de la chaîne prédite classée en réponse à une détermination selon laquelle la chaîne prédite classée est parmi un nombre prédéterminé de chaînes prédites ayant le classement le plus élevé.

6. Dispositif électronique (100) comprenant un écran (118) et un processeur (102), dans lequel le processeur (102) est configuré pour exécuter le procédé tel que revendiqué dans l'une quelconque des revendications 1 à 5.
